# DEMANDE DE BREVET EUROPEEN

(11) **EP 4 276 211 A1**
(43) Date de publication de la demande: **15.11.2023**
(21) Numéro de dépôt: 23169332.6
(22) Date de dépôt: 21.04.2023
(51) Int. Cl.: C22C 38/00, C22C 38/02, C22C 38/04, C22C 38/40, C22C 38/58, C21D 8/02, C21D 9/46, C21D 1/26, F17C 1/12, F17C 3/02

(54) **PROCÉDÉ DE FABRICATION D'UNE TÔLE CORRUGUÉE EN ACIER INOXYDABLE LAMINÉE À FROID**

(30) Priorité: 11.05.2022 FR 2204482
(71) Demandeur: Gaztransport et Technigaz, 78470 Saint-Rémy-lès-Chevreuse (FR)
(72) Inventeur: LAURAIN, Nicolas, 78470 Saint-Rémy-lès-Chevreuse, (FR); RENON, Vincent, 78470 Saint-Rémy-lès-Chevreuse, (FR)
(74) Mandataire: Callu-Danseux, Violaine

(57) **Abrégé**

L'invention concerne un procédé de fabrication d'une tôle corruguée en acier inoxydable, comprenant les étapes suivantes :
- Fourniture (100) d'une tôle en acier inoxydable ;
- Déformation (110) de la tôle en acier inoxydable, pour obtenir une tôle corruguée comprenant des zones cibles présentant un taux de déformation géométrique compris entre 15% et 45% ;
- Traitement thermique (120) des zones cibles à une température et une durée de traitement thermique définies selon la composition de l'acier inoxydable, pour obtenir une tôle corruguée à zones cibles recristallisées ;
- Refroidissement (130) de la tôle corruguée à zones cibles recristallisées.

## Description

La présente invention concerne un procédé de fabrication d'une tôle en acier inoxydable corruguée.

Ce procédé de fabrication est plus particulièrement destiné à être mis en oeuvre pour la fabrication d'une tôle en acier inoxydable corruguée pour application en tant que membrane primaire d'étanchéité pour le transport et/ou stockage de gaz naturel liquéfié (aussi connu sous l'acronyme GNL) dans une cuve.

Une tôle obtenue par le procédé de fabrication de l'invention pourra, à titre d'exemple illustratif préférentiel mais non-limitatif, être utilisée pour la réalisation d'une paroi isolante et étanche d'une cuve, intégrée dans une structure porteuse, par exemple la coque d'un navire.

De telles cuves sont par exemple celles utilisées sur les navires de transport de gaz liquéfié. Elles doivent être parfaitement étanches et suffisamment isolantes pour contenir du gaz liquéfié à basse température et en limiter l'évaporation.

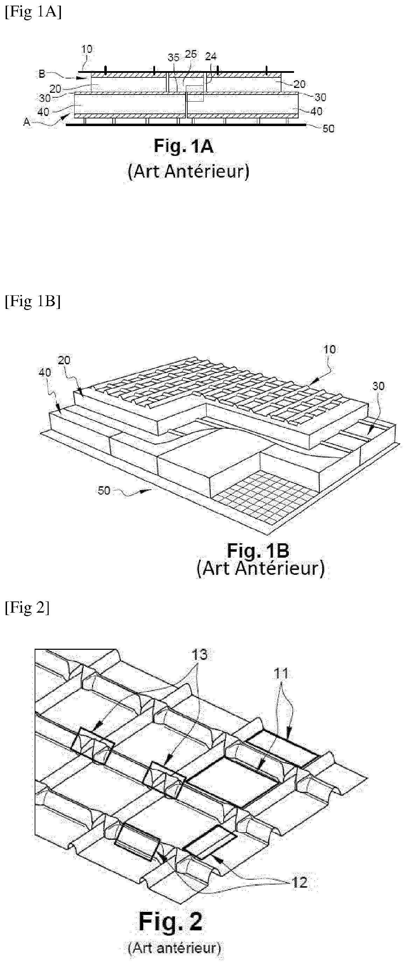

En référence à la figure 1A, ces parois sont généralement constituées de deux membranes d'étanchéité successives, l'une primaire 10 en contact avec le produit contenu dans la cuve et l'autre secondaire 30 disposée entre la membrane primaire 10 et la structure porteuse 50, ces deux membranes étant alternées avec deux barrières thermiquement isolantes 20, 40. On connaît ainsi des parois de cuve constituées d'une isolation primaire 20 associée à une membrane primaire 10 en acier inoxydable, et d'une isolation secondaire 40 associée à une membrane secondaire 30 souple ou rigide. Cette membrane secondaire 30 comporte au moins une fine feuille métallique continue, par exemple en aluminium, collée en sandwich entre deux tissus de fibres de verre, un liant pouvant assurer la cohésion entre les tissus de verre et l'aluminium. Les parois isolantes et étanches de ces cuves sont de préférence réalisées à partir d'un ensemble de panneaux préfabriqués. De façon courante, chaque panneau préfabriqué a la forme générale d'un parallélépipède rectangle, l'élément d'isolation primaire 20 et l'élément d'isolation secondaire 40 ayant respectivement, vus en plan, la forme d'un premier rectangle et d'un deuxième rectangle dont les côtés sont sensiblement parallèles, les longueurs et/ou la largeur du premier rectangle étant inférieure à celles du second rectangle, afin de ménager un rebord périphérique. Les rebords périphériques des éléments d'isolation secondaire 40 adjacents et les parois latérales des éléments d'isolation primaire 20 définissent des couloirs 24, pouvant s'étendre sur toute la longueur, largeur ou hauteur de la cuve. La continuité de l'isolation primaire 20 est réalisée en insérant des pavés 25 dans les couloirs 24. Pour assurer la continuité de la membrane secondaire 30, au niveau de la jonction entre deux panneaux adjacents, lesdits rebords périphériques sont recouverts, avant la mise en place desdits pavés 25, d'une bande de nappe souple 35, comportant au moins une fine feuille métallique continue. Le montage de ces différents panneaux nécessite des modes opératoires très stricts et une grande précision de montage, afin de garantir l'isolation thermique et l'étanchéité de la cuve.

Une autre variante de paroi de cuve est partiellement représentée à la figure 1B. Dans cette variante, les parois sont également constituées de deux membranes d'étanchéité successives, l'une primaire 10 en contact avec le produit contenu dans la cuve et l'autre secondaire 30 disposée entre la membrane primaire 10 et la structure porteuse 50, ces deux membranes étant alternées avec deux barrières thermiquement isolantes 20, 40. Dans cette variante, la membrane secondaire 30 peut être tendue en Invar^{®} ou en alliage à haute teneur en manganèse et la membrane primaire corruguée 10 en acier inoxydable. Les panneaux d'isolation des barrières thermiquement isolantes 20, 40 sont préférentiellement en mousse de polyuréthane renforcée.

Les cuves de tels navires sont soumises à de nombreuses contraintes. Ainsi, la mise en froid de la cuve avant son remplissage à des températures très basses, par exemple de l'ordre de -160°C pour du méthane, voire voisines de -170°C, peut créer des contraintes dues aux différentes contractions thermiques des matériaux constituant les parois. De plus, le navire en navigation est soumis à de nombreuses contraintes telles que la houle, ce qui peut provoquer des déformations de sa coque et donc des parois de la cuve par répercussion. Les mouvements de la cargaison peuvent aussi créer des contraintes de surpression ou contre-pression sur les parois de la cuve.

A noter que l'agencement du ou des éléments d'isolation et des membranes est décrit ci-dessus à titre d'illustration et n'est en aucun cas limitatif. L'invention porte plus spécifiquement sur la membrane primaire décrite ci-après.

La membrane primaire 10 comprend des corrugations s'étendant sur une surface de la membrane primaire. Ces corrugations visent à donner de la souplesse à la membrane primaire pour accommoder la contraction thermique de l'acier lors de la mise en froid de la cuve. Il est ainsi possible de définir la surface de la membrane primaire par des zones planes 11, des ondes 12 et des noeuds 13, comme représenté sur la figure 2. Ces noeuds 13 sont donc issus d'une déformation et sont lieu d'une transformation métallurgique de la matière dont la tôle est constituée. Il en résulte que les noeuds 13 forment une zone géométriquement sollicitée.

Lors du transport et/ou stockage de gaz naturel liquéfié, la membrane primaire 10 est en contact direct avec le gaz naturel liquéfié. De ce fait, et comme mentionné ci-dessus, les noeuds 13 sont des zones qui présentent un risque de rupture par fatigue accru lors de l'utilisation de la tôle corruguée en tant que membrane primaire d'étanchéité pour le transport et/ou stockage de GNL. En effet, les mouvements de flexion de poutre du navire fatiguent la double coque du navire et, par répercussion, la membrane.

L'invention vise à pallier tout ou partie des problèmes cités plus haut en proposant un procédé de fabrication d'une tôle en acier inoxydable corruguée présentant un traitement thermique particulier permettant de modifier la structure de la matière dans les zones cibles, conférant à la tôle ainsi obtenue une meilleure tenue en fatigue en améliorant sa limite élastique.

A cet effet, l'invention a pour objet un procédé de fabrication d'une tôle corruguée en acier inoxydable laminée à froid, comprenant les étapes suivantes :
- Fourniture d'une tôle en acier inoxydable laminée à froid ayant une composition comprenant, les teneurs étant exprimées en masse :
   0,005 % ≤ C ≤ 0,05 %, et préférentiellement C ≤ 0,03% ;
   0,1 % ≤ Si ≤1 % ;
   0,5% ≤ Mn ≤ 2 % ;
   4 % ≤ Ni ≤ 10,5 % ;
   16 % ≤ Cr ≤ 20 % ;
   0 % < N ≤ 0,2 % ;
   0 % < P ≤ 0,045 % ;
   0% < S ≤ 0,015 % ;
   le reste étant du fer et des éléments résiduels résultant de l'élaboration;
- Déformation de la tôle en acier inoxydable, pour obtenir une tôle corruguée comprenant des zones cibles présentant un taux de déformation géométrique compris entre 15% et 45%, préférentiellement inférieur à 35%, ou un taux de réduction de sectiondans les zones cibles inférieur à 25% ;
- Traitement thermique des zones cibles de la tôle corruguée à une température et une durée de traitement thermique définies selon la composition de l'acier inoxydable, pour obtenir une tôle corruguée à zones cibles recristallisées ;
- Refroidissement de la tôle corruguée à zones cibles recristallisées ;
et, pour une teneur de l'acier inoxydable, exprimée en masse, en nickel et en azote telle que :
- 4% ≤ Ni ≤ 8%,
- 0,05% < N ≤ 0,2%,
la durée du traitement thermique est définie selon la température du traitement thermique :

| température | durée |
|---|---|
| 700°C | 15 à 40 minutes |
| 750°C | 5 à 20 minutes |
| 800°C | 3 à 8 minutes |
| 850°C | 30 secondes à 3 minutes |

et, pour une teneur de l'acier inoxydable, exprimée en masse, en nickel et en azote telle
que :
- 8% < Ni ≤ 10,5%,
- 0 < N ≤ 0,1 %,
la durée du traitement thermique est définie selon la température du traitement thermique :

| température | durée |
|---|---|
| 750°C | 4 à 15 minutes |
| 800°C | 2 à 8 minutes |
| 850°C | 20 secondes à 2 minutes |
| 900°C | 5 à 15 secondes |

Avantageusement, le refroidissement de la tôle corruguée à zones cibles recristallisées est réalisé à une vitesse supérieure ou égale à 50 °C/s.

Avantageusement, le traitement thermique est réalisé dans un four à passage.

Avantageusement, le traitement thermique et/ou le refroidissement est réalisé dans un environnement inerte ou réducteur.

Avantageusement, le traitement thermique est réalisé dans un four sous vide.

Dans un autre mode de réalisation du procédé de fabrication selon l'invention, le traitement thermique peut être réalisé par application de cloches chauffantes sur les zones cibles.

Avantageusement, le refroidissement de la tôle corruguée à zones cibles recristallisées est réalisé par trempe dans un fluide de trempe.

Avantageusement, le refroidissement de la tôle corruguée à zones cibles recristallisées peut être réalisé par injection sous pression d'un fluide de trempe, préférentiellement à température ambiante.

Le procédé de fabrication selon l'invention peut comprendre en outre, préalablement au traitement thermique, une étape de nettoyage de la tôle corruguée.

L'invention porte aussi sur une cuve étanche et thermiquement isolante comprenant au moins une tôle corruguée à zones cibles recristallisées obtenue par un tel procédé de fabrication.

L'invention concerne aussi une tôle corruguée en acier inoxydable laminée à froid ayant une composition comprenant, les teneurs étant exprimées en masse :
0,005 % ≤ C ≤ 0,05 %, et préférentiellement C ≤ 0,03% ;
0,1 % ≤ Si ≤1 % ;
0,5% ≤ Mn ≤ 2 % ;
4 % ≤ Ni ≤ 10,5 % ;
16 % ≤ Cr ≤ 20 % ;
0 % < N ≤ 0,2 % ;
0 % < P ≤ 0,045 % ;
0% < S ≤ 0,015 % ;

le reste étant du fer et des éléments résiduels résultant de l'élaboration;
ladite tôle corruguée comprenant des corrugations définissant au moins une zone cible présentant un taux de déformation géométrique compris entre 15% et 45%, préférentiellement inférieur à 35%, ou un taux de réduction de section dans les zones cibles inférieur à 25%, et dans laquelle la au moins une zone cible est recristallisée.

Avantageusement, la tôle corruguée présente une première corrugation selon une première direction et une deuxième corrugation selon une deuxième direction, sensiblement perpendiculaire à la première direction, à l'intersection de laquelle se trouve un noeud comprenant la au moins une zone cible.

L'invention concerne aussi une cuve étanche et thermiquement isolante comprenant au moins une telle tôle corruguée.

Ces caractéristiques et avantages, et d'autres, de la présente invention apparaîtront plus clairement à partir de la description suivante, faite en référence aux dessins joints, donnés à titre d'exemples non limitatifs, et sur lesquels :
[Fig.1A] est une vue schématique en section d'une paroi de cuve de l'art antérieur ;
[Fig.1B] est une vue schématique d'une autre paroi de cuve de l'art antérieur ;
[Fig. 2] représente les différentes zones d'une tôle corruguée de l'art antérieur ;
[Fig. 3] représente un organigramme des étapes du procédé de fabrication selon l'invention ;
[Fig. 4] représente le détail d'un noeud d'une tôle corruguée obtenue après l'étape de déformation de la tôle du procédé de fabrication selon l'invention ;
[Fig. 5] représente schématiquement l'étape de traitement thermique dans un four à passage et l'étape de refroidissement du procédé de fabrication selon l'invention.
[Fig. 6] représente le détail des microstructures d'une tôle corruguée en acier inoxydable laminée à froid obtenue par le procédé de fabrication selon l'invention.
[Fig. 7] représente le détail des microstructures d'une tôle corruguée en acier inoxydable laminée à froid obtenue par un procédé différent du procédé de fabrication selon l'invention.
[Fig. 8] présente des résultats d'essais réalisés sur différents échantillons avec et sans le procédé de fabrication selon l'invention.
[Fig. 9] est une illustration simplifiée d'une déformation de tôle.

Par souci de clarté, les mêmes éléments porteront les mêmes repères dans les différentes figures.

Dans ce qui suit, par tôle en acier inoxydable, il faut comprendre une pièce d'acier inoxydable obtenue par laminage à froid et présentant la forme d'un parallélépipède rectangle et d'épaisseur mince, par exemple comprise entre 0,15 et 5 mm. En outre, le terme corrugué signifie également ondulé, une tôle corruguée est à comprendre comme une tôle présentant des corrugations ou ondulations.

Préférentiellement, dans le cadre de l'invention, la tôle en acier inoxydable a une épaisseur comprise entre 0,5 et 2 mm. Sa largeur est préférentiellement inférieure ou égale à 200 cm et sa longueur est préférentiellement inférieure ou égale à 400 cm. Toutefois, d'autres dimensions peuvent être envisagées en adaptant les moyens mis en oeuvre dans la réalisation du procédé de l'invention, notamment la taille du four comme cela apparaîtra dans la suite de la description de l'invention.

La figure 1A est une vue schématique en section d'une paroi de cuve de l'art antérieur. Une tôle fabriquée par le procédé de l'invention pourrait remplacer la membrane primaire 10. Cette figure a déjà été décrite ci-dessus.

La figure 1B est une vue schématique d'une autre paroi de cuve de l'art antérieur. Une tôle fabriquée par le procédé de l'invention pourrait remplacer la membrane primaire 10. Cette figure a déjà été décrite ci-dessus.

La figure 2 représente les différentes zones d'une tôle corruguée de l'art antérieur. Cette figure a déjà été discutée précédemment.

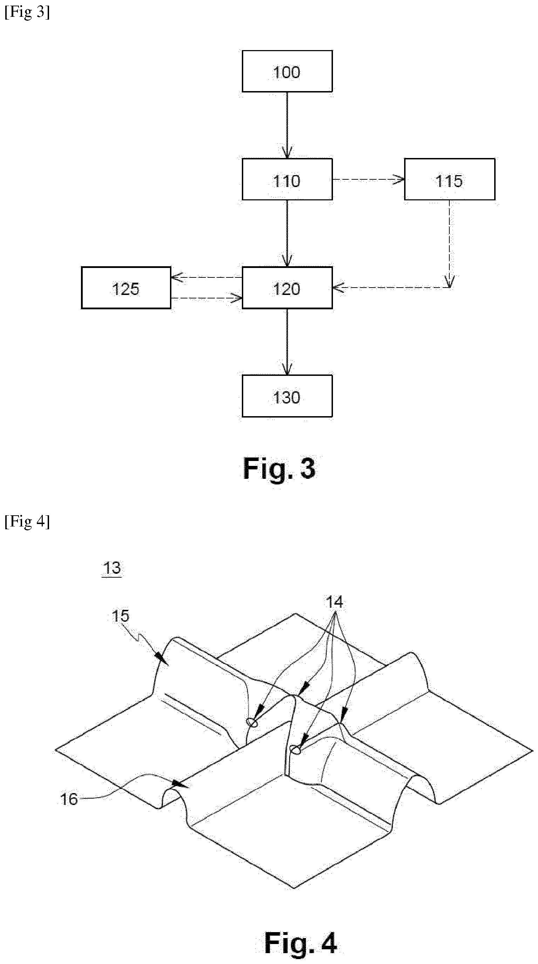

La figure 3 représente un organigramme des étapes du procédé de fabrication selon l'invention. Le procédé de fabrication d'une tôle corruguée en acier inoxydable laminée à froid selon l'invention comprend une étape 100 de fourniture d'une tôle en acier inoxydable laminée à froid ayant une composition comprenant, les teneurs étant exprimées en masse :
0,005 % ≤ C ≤ 0,05 %, et préférentiellement C ≤ 0,03% ;
0,1 % ≤ Si ≤1 % ;
0,5% ≤ Mn ≤ 2 % ;
4 % ≤ Ni ≤ 10,5 % ;
16 % ≤ Cr ≤ 20 % ;
0 % < N ≤ 0,2 % ;
0 % < P ≤ 0,045 % ;
0 % < S < 0,015 %.

Optionnellement, la composition de l'acier inoxydable de la tôle fournie peut comprendre du molybdène dans une teneur, exprimée en masse, inférieure ou égale à 3% (Mo ≤ 3 %) et/ou du cuivre dans une teneur, exprimée en masse, inférieure ou égale à 0,5% (Cu ≤ 0,5 %).

Le reste de la composition est constitué de fer et d'impuretés inévitables résultant de l'élaboration de l'acier. La microstructure de cet acier inoxydable est essentiellement austénitique (sous forme d'austénite métastable). La taille moyenne des grains d'austénite, aussi appelée austénite primaire, est comprise entre 6 µm (micromètres) et à 35 µm (micromètres).

Le procédé de fabrication comprend une étape 110 de déformation de la tôle en acier inoxydable, par exemple par pliage ou emboutissage, pour obtenir une tôle corruguée comprenant des corrugations définissant des zones cibles présentant, pour une déformation réalisée par pliage, un taux de déformation géométrique compris entre 15% et 45% (préférentiellement inférieur à 35%), ou présentant, pour une déformation réalisée par emboutissage, un taux de réduction de section dans les zones cibles inférieur à 25%.

Le taux de réduction de section peut être vu comme un rapport entre les sections de tôle avant et après déformation. Une tôle de section initiale de 5 mm² qui a une section de 4,5 mm² après déformation (de type emboutissage) a un taux de réduction de section de 10%.

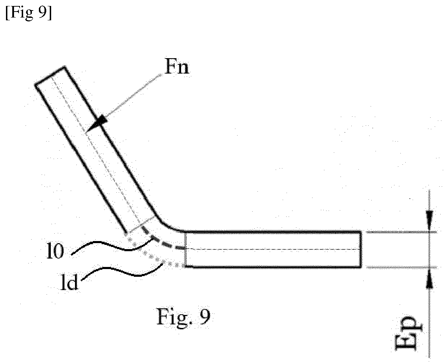

Le taux de déformation géométrique est un rapport représentant la déformation géométrique de la tôle de manière tridimensionnelle. Il peut être déterminé par calcul numérique selon des équations connues de l'Homme de métier. La figure 9 est une illustration simplifiée d'une déformation de tôle. Pour illustration et de manière simplifiée, si on ne considère qu'une seule dimension, une tôle pliée d'épaisseur Ep (voir figure 9) de sorte que, pour une longueur de segment de fibre neutre Fn (dont la longueur est notée 10, en pointillés épais sur la figure 9) *l0* = 100mm et un segment de fibre extérieure (dont la longueur est notée ld avec *ld* = *l0 + Δl* , en pointillés fins sur la figure 9) de longueur *ld* = 110mm, la matière le long de cette fibre extérieure présente un taux de déformation de 10%, sans que l'épaisseur *Ep* de la tôle ne soit modifiée dans le pliage.

L'étape 110 de déformation de la tôle permet la formation de corrugations, ou ondulations, sur la tôle. Ces corrugations 15 sont visibles sur la figure 4. Ces corrugations visent à apporter de la souplesse à la tôle en vue de son utilisation pour le transport et/ou stockage de gaz liquéfié.

La figure 4 représente le détail d'un noeud 13 d'une tôle corruguée obtenue après l'étape 110 de déformation de la tôle. Sur la figure 4, après l'étape de déformation, la tôle corruguée présente une première corrugation 15 selon une première direction et une deuxième corrugation 16 selon une deuxième direction sensiblement perpendiculaire à la première direction. A l'intersection de la première corrugation 15 et la deuxième corrugation 16 se trouve le noeud 13. Il comprend des zones cibles 14 présentant un taux de déformation compris entre 15% et 45%, préférentiellement inférieur à 35%, ou un taux de réduction de section dans les zones cibles inférieur à 25%. Ce taux de déformation/réduction est inhérent à l'étape de déformation et peut être déterminé par des méthodes de calcul connues par l'Homme du métier. Ces taux de déformation entraînent l'apparition de martensite, en plus forte teneur dans les zones cibles 14 du noeud 13.

L'étape 110 de déformation de la tôle génère, dans les zones cibles 14, un changement au niveau microstructural de l'acier inoxydable. L'austénite métastable de l'acier inoxydable, initialement présente sous forme de grains de taille moyenne comprise entre 6 et 35 micromètres, se transforme en un mélange d'austénite et de martensite. La martensite se présente sous forme de lamelles de dimensions plus petites que celle des grains d'austénite primaire de la tôle d'acier avant déformation.

La transformation d'austénite primaire en martensite est partielle. Après déformation, le ratio entre l'austénite et la martensite dépend de plusieurs facteurs, et notamment de la composition initiale de l'acier inoxydable et du niveau de déformation/réduction de section de la tôle. En d'autres termes, à déformation identique, le ratio entre l'austénite et la martensite sera différent pour deux tôles d'acier inoxydable de composition différente. De la même manière, pour une composition initiale d'acier donnée, le ratio entre l'austénite et la martensite sera différent selon l'endroit de la tôle considéré (zone cible, onde ou zone plane) du fait de la différence du taux de déformation/réduction de section subie selon l'endroit de la tôle.

Les zones cibles 14 présentent un taux de déformation géométrique compris entre 15% et 45% ou un taux de réduction de section localement dans les zones cibles inférieur à 25%. On parle de taux de déformation géométrique pour des zones cibles obtenues suite à une étape de déformation par pliage. On parle de taux de réduction de section pour des zones cibles obtenues suite à une étape de déformation par emboutissage. Comme évoqué précédemment, ce sont ces zones cibles 14 qui forment une zone géométriquement sollicitée, et donc présentent un risque de rupture par fatigue accru. Dans les zones cibles 14, les grains d'austénite se sont transformés, au moins partiellement, en lamelles de martensite lors de l'étape 110 de déformation.

Les étapes du procédé de fabrication selon l'invention décrites ci-après permettent d'améliorer la tenue en fatigue des zones cibles 14 sans détériorer les propriétés mécaniques des zones adjacentes aux zones cibles 14.

Le procédé de fabrication selon l'invention comprend, après l'étape 110 de déformation de la tôle, une étape 120 de traitement thermique de la tôle corruguée comprenant les zones cibles 14, à une température et une durée de traitement thermique définies selon la composition de l'acier inoxydable, pour obtenir une tôle corruguée à zones cibles recristallisées. La recristallisation des zones cibles est expliquée ci-dessous. Dans le cadre de l'invention, la température de recristallisation est comprise entre 700 et 900 °C et la durée de traitement thermique est comprise entre 5 secondes et 40 minutes.

Dans le cadre de l'invention, le traitement thermique 120 d'une pièce signifie la chauffe et le maintien en température de ladite pièce.

Plus précisément, pour une teneur de l'acier inoxydable, exprimée en masse, en nickel et en azote telle que :
- 4% ≤ Ni ≤ 8%
- 0,05% < N ≤ 0,2%,
la durée du traitement thermique 120 est définie selon la température du traitement thermique comme suit :

| température | durée |
|---|---|
| 700°C | 15 à 40 minutes |
| 750°C | 5 à 20 minutes |
| 800°C | 3 à 8 minutes |
| 850°C | 30 secondes à 3 minutes |

En d'autres termes, la durée du traitement thermique est directement liée à la température du traitement thermique. Pour cette teneur en nickel et azote de l'acier considéré, pour une température de 700°C, la durée de traitement thermique est comprise entre 15 et 40 minutes. Pour une température de 750°C, la durée de traitement thermique est comprise entre 5 et 20 minutes, etc.

Par ailleurs, pour une teneur de l'acier inoxydable, exprimée en masse, en nickel et en azote telle que :
- 8% < Ni ≤ 10,5%
- 0 <N ≤ 0,1 %,
la durée du traitement thermique 120 est définie selon la température du traitement thermique comme suit :

| température | durée |
|---|---|
| 750°C | 4 à 15 minutes |
| 800°C | 2 à 8 minutes |
| 850°C | 20 secondes à 2 minutes |
| 900°C | 5 à 15 secondes |

Il apparaîtra plus généralement à l'Homme du métier que diverses modifications peuvent être apportées aux modes de réalisation décrits ci-dessus, à la lumière de l'enseignement qui lui est ici divulgué. L'invention est définie par des plages de durée de traitement thermique selon une température de traitement thermique, par exemple 750°C ou 800°C. Toutefois, l'invention s'applique de manière analogue pour des températures de traitement thermique comprises entre les bornes indiquées. A titre d'exemple, pour une température de traitement thermique de 775°C (c'est-à-dire comprise entre les températures indiquées de 750 et 800°C), l'Homme du métier sait sur la base de la description de l'invention que la durée du traitement thermique devra être adaptée entre 4 et 8 minutes.

Lors de l'étape 120 de traitement thermique, les lamelles de martensite présentes dans la tôle corruguée se divisent pour se transformer en grains d'austénite de taille inférieure à la taille des lamelles de martensite (et donc bien inférieure à la taille initiale des grains d'austénite dans l'acier de la tôle avant déformation). Autrement dit, grâce au traitement thermique, la martensite dans les zones cibles est majoritairement transformée en austénite à grains fins. Typiquement, le taux de martensite résiduelle après traitement thermique est inférieur ou égal à 4%. On parle alors de zones cibles recristallisées. En d'autres termes, une zone cible est recristallisé dès lors que sa microstructure de type martensite est transformée en microstructure d'austénite à grains fins, dite secondaire. La production de ces nano-grains d'austénite, ou plus généralement le raffinement d'une microstructure en grains d'austénite plus petits, permet d'obtenir de meilleures performances en termes de limite élastique du matériau. L'amélioration de cette limite élastique a un effet bénéfique sur la tenue en fatigue des zones cibles concernées.

Enfin, le procédé de fabrication selon l'invention comprend une étape 130 de refroidissement de la tôle corruguée à zones cibles recristallisées. L'étape 130 de refroidissement de la tôle corruguée à zones cibles recristallisées stoppe la croissance des grains dans toute la tôle et a pour objectif de figer la microstructure sous forme de nano-grains d'austénite obtenue par le traitement thermique 120.

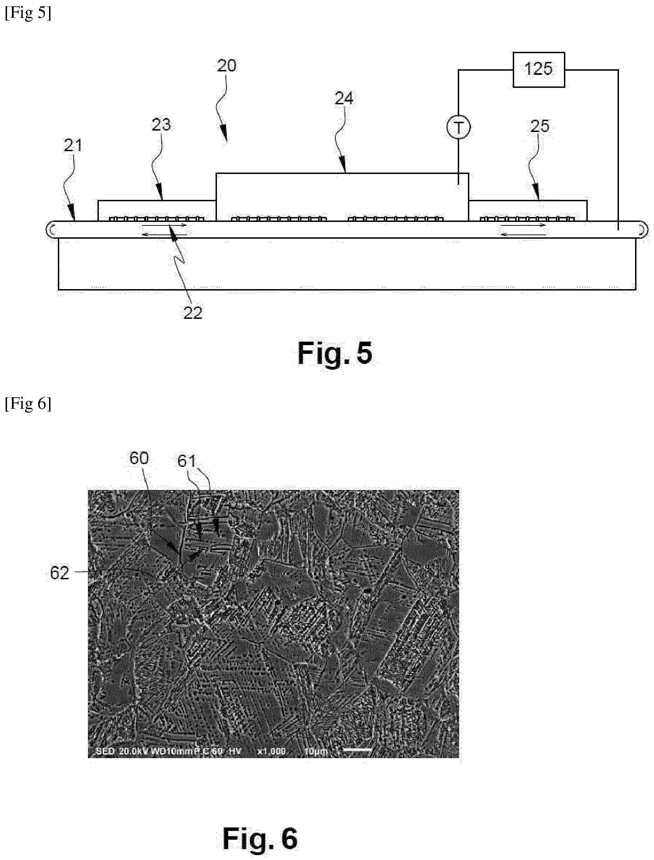

La figure 5 représente schématiquement l'étape de traitement thermique dans un four à passage et l'étape de refroidissement du procédé de fabrication selon l'invention.

Dans un mode de réalisation présenté à la figure 5, le traitement thermique 120 est réalisé dans un four à passage 20. Avantageusement, l'étape 120 de traitement thermique et l'étape 130 de refroidissement ont lieu dans un environnement protecteur vis-à-vis de la contamination de surface. On peut noter que le traitement thermique 120 peut alternativement être réalisé dans un four sous vide. Ces environnements spécifiques ont pour objectif de prévenir la formation de calamine ou toute autre contamination à la surface de la tôle corruguée. Ces contaminations de surface sont à éviter pour s'affranchir d'une étape de décapage (mécanique, chimique ou autre) après le traitement thermique. Toutefois, le procédé selon l'invention peut également comprendre une étape de décapage après le traitement thermique 120, notamment dans le cas où l'environnement du traitement thermique n'est pas protecteur vis-à-vis de la contamination de surface.

Avantageusement, le procédé de fabrication selon l'invention peut comprendre en outre, préalablement au traitement thermique 120, une étape 115 de nettoyage de la tôle corruguée. L'étape 115 de nettoyage vise à éliminer toutes les traces de polluants présents sur la tôle corruguée, notamment des corps gras ou des copeaux métalliques.

Comme illustré à la figure 5, la tôle corruguée est posée sur une sole mobile 21, par exemple un tapis ou un ensemble de rouleaux, qui traverse le four 20 de part en part. Par la mise en mouvement de la sole 21 selon la direction 22, la tôle corruguée se déplace à l'intérieur 20 dans une première zone 23 appelée zone d'entrée. La zone d'entrée 23 est une zone sans chauffe. Par contre, dans le cas d'un environnement contrôlé, la zone d'entrée 23 est sous environnement contrôlé. Ainsi, sans rupture de l'environnement, par translation de la sole selon la direction 22, la tôle corruguée est ensuite transférée dans une deuxième zone 24 appelée zone de chauffe. L'étape 120 de traitement thermique a lieu dans la zone de chauffe 24, zone dans laquelle la tôle corruguée est exposée à la température cible pendant une durée adéquate. A titre d'exemple, pour une tôle corruguée d'un acier inoxydable avec une teneur, exprimée en masse, en nickel et en azote respectivement de 6% et 0,15% et une zone de chauffe 24 réglée à 800 °C, la durée d'exposition est comprise entre 5 et 10 minutes, par exemple 8 minutes. Pour une température donnée et une composition donnée de l'acier inoxydable de la tôle corruguée, des tests ont été réalisées par la Demanderesse pour déterminer les plages de durée d'exposition mentionnées ci-dessus.

La vitesse d'avancée de la sole à travers le four à passage 20 est calculée en fonction de la longueur de la zone de chauffe 24 afin d'obtenir la durée d'exposition souhaitée. Par exemple, pour un four à passage présentant une zone de chauffe de 10m de long et pour une cible d'exposition de 5 minutes à 800 °C, la vitesse de la sole est fixée à 2m/min.

Alternativement, selon les dimensions des tôles corruguées, une avancée de la sole étape par étape peut également être envisagée, pour limiter les durées durant lesquelles la tôle corruguée est présente simultanément dans deux étapes.

A noter que dans cet exemple, la sole est mobile en translation. Toutefois, le même principe s'applique à d'autres types de mouvement, notamment de rotation avec un four à chariot rotatif, et préférentiellement pour des pièces de petites dimensions, par exemple de l'ordre de 30 cm × 50 cm (ou plus selon la taille du four). L'invention repose sur un traitement thermique à une température et une durée prédéfinies dans une zone de chauffe.

A la fin de la durée d'exposition dans la zone de chauffe 24, la tôle corruguée subit un refroidissement rapide, par exemple un refroidissement de type hyper-trempe.

L'étape 120 de traitement thermique et/ou l'étape 130 de refroidissement sont préférentiellement réalisées dans un environnement inerte ou réducteur afin d'éviter la formation d'oxyde en surface de la tôle. Pour l'étape 130 de refroidissement, le fluide de trempe est alors choisi parmi les fluides protecteurs vis-à-vis de l'oxydation. Dans les deux cas (étape 120 de traitement thermique et étape 130 de refroidissement), on peut notamment noter l'azote hydrogéné, l'argon, l'hélium, ou éventuellement l'hydrogène pur. Alternativement, si le refroidissement n'a pas lieu sous environnement inerte ou réducteur, ou en complément, la tôle corruguée à zones cibles recristallisées peut être soumise, après l'étape 130 de refroidissement, à une étape de décapage afin d'éliminer tout résidu non souhaité qui serait présent en surface de la tôle.

Dans le cas du four à passage 20 illustré à la figure 5, le refroidissement 130 est réalisé par le transfert de la tôle corruguée à zones cibles recristallisées dans une zone de trempe 25 adjacente à la zone de chauffe 24 dans la direction 22 d'avancement de la sole.

Avantageusement, l'étape 130 de refroidissement est réalisée très rapidement, par exemple à une vitesse supérieure ou égale à 50 °C/s.

Le traitement thermique 120 et/ou le refroidissement 130 est préférentiellement réalisé dans un environnement inerte ou réducteur pour les raisons expliquées précédemment.

Dans le cas d'un traitement thermique 120 en four sous vide ou environnement contrôlé, le refroidissement 130 est réalisé par injection sous pression du fluide de trempe à température ambiante.

Dans un autre mode de réalisation, le traitement thermique 120 peut être réalisé par application de moyens de chauffe locale, par exemple de cloches chauffantes, sur les zones cibles. Pour cela, les cloches chauffantes sont positionnées sur les noeuds en épousant la forme de la tôle corruguée. Il est aussi possible d'envisager des moyens de chauffe de type induction ou convection, notamment pour les traitements thermiques de courtes durées.

Comme précisé précédemment, le traitement thermique étant réalisé sur des tôles fines (d'épaisseur typiquement comprise entre 0,5 et 2 mm), il est ap-proximé que la durée de chauffe à coeur est proche de la durée de chauffe en peau. Ainsi, il est considéré que la durée de chauffe à coeur est faible devant les durées d'exposition définies dans le procédé de fabrication de l'invention.

Dans le cas où le moyen de chauffe de la zone de chauffe du four ne permet pas une mise en place de la tôle à traiter dans une zone de chauffe déjà chauffée à la température ciblée (par exemple four sous vide), il est tenu compte de l'impact de la pente de montée en température en diminuant la durée de maintien à température cible. Cette réduction est d'autant plus importante que la température de traitement thermique est élevée et la vitesse de montée en température lente. A noter que pour les durées de traitement thermique inférieures à 5 minutes, une montée en température progressive jusqu'à la température cible n'est pas possible.

Le procédé de fabrication peut aussi comprendre une étape 125 de régulation de la vitesse d'avancée de la sole en fonction de la température dans la zone de chauffe 24 afin de bien contrôler la durée du traitement thermique et de prendre éventuellement en compte la pente de montée en température. Par exemple, pour une pièce d'épaisseur plus importante, la vitesse d'avancée de la sole est régulée de manière à être inférieure à la vitesse d'avancée pour une pièce d'épaisseur plus fine.

Ainsi, le procédé de fabrication selon l'invention repose sur un traitement thermique optimisé en fonction de la composition chimique de l'acier de la tôle. Les paramètres de durée et de température du traitement thermique sont choisis pour obtenir une réversion satisfaisante de la martensite en austénite dans les zones cibles du noeud, tout en limitant la croissance des grains d'austénite primaire (c'est-à-dire dans les zones non déformées du noeud) et secondaire (dans les zones déformées).

Le procédé de fabrication de l'invention se base sur un traitement thermique spécifique aux zones cibles, zones fragilisées du fait de la déformation pour obtenir les corrugations indispensables à l'application envisagée de transport/stockage de gaz liquéfié. Le traitement thermique de l'invention permet la transformation de la martensite présente dans les zones cibles en austénite secondaire à taille de grains inférieure. Il en résulte de meilleures propriétés mécaniques des zones cibles. Autrement dit, l'invention tire profit de la transformation partielle au niveau des microstructures des zones cibles par le biais de la martensite formée pour obtenir, après traitement thermique, des grains d'austénite de taille inférieure à celles des lamelles de martensite et des grains d'austénite initialement présent dans l'acier inoxydable.

La tôle corruguée à zones cibles recristallisées fabriquée par le procédé de fabrication selon l'invention peut être utilisée comme composant dans la fabrication d'une membrane d'étanchéité (membrane primaire 10) pour le transport et/ou le stockage de gaz liquéfié à températures cryogéniques.

La figure 6 représente le détail des microstructures d'une tôle corruguée en acier inoxydable laminée à froid obtenue par le procédé de fabrication selon l'invention. Sur ce grossissement (x 1000), nous pouvons voir la délimitation des grains 60 d'austénite initialement présents dans la tôle d'acier inoxydable laminée à froid. Ces grains se sont au moins partiellement transformés en martensite, sous forme de lamelles 61. Avec le traitement thermique adapté du procédé de fabrication selon l'invention, les lamelles 61 se sont transformées en austénite dite secondaire, sous forme de grains fins 62, ou nano-grains. C'est le raffinement des grains 60 d'austénite primaire en nano-grains 62 d'austénite secondaire qui permet d'obtenir de meilleures performances mécaniques par amélioration de la limite élastique de la tôle ainsi fabriquée. La taille moyenne des grains d'austénite secondaire est comprise entre 0,2 µm (micromètres) et 2 µm (micromètres), et pouvant même être inférieure à 0,2 µm.

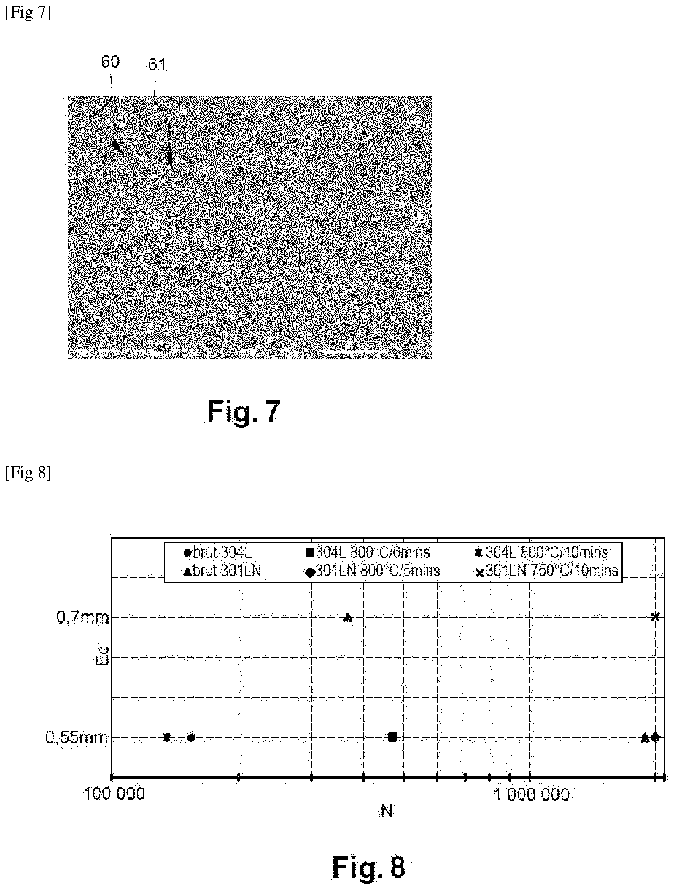

La figure 7 représente le détail des microstructures d'une tôle corruguée en acier inoxydable laminée à froid obtenue par un procédé différent du procédé de fabrication selon l'invention. Dans cet exemple, la tôle corruguée a fait l'objet d'un traitement thermique trop long, c'est-à-dire dont la durée a excédé la durée de traitement thermique du procédé de l'invention. Autrement dit, la tôle corruguée dont le détail est représenté sur la figure 7 n'a pas été obtenue avec le procédé de fabrication selon l'invention.

Sur ce grossissement (x 500), nous pouvons voir la délimitation des grains 60 d'austénite, de dimensions similaires à ceux initialement présents dans la tôle d'acier inoxydable laminée à froid. Des traces de lamelles 61 de martensite sont faiblement visibles. Comme on peut le voir, une durée de traitement thermique excessive n'a pas conduit à la formation de nano-grains d'austénite secondaire. Au contraire, le traitement thermique a recuit la matière. La microstructure obtenue comporte un mélange de grains d'austénite primaire et de grains d'austénite secondaire ayant eu une croissance importante jusqu'à une taille proche de celle des grains d'austénite primaire.

Les microstructures présentées aux figures 6 et 7 mettent en évidence l'importance cruciale de l'étape 120 du traitement thermique. En effet, il faut d'une part tenir compte de la composition chimique de l'acier utilisé, et d'autre part, il faut adapter la durée du traitement thermique à la température d'exposition. Si la durée du traitement thermique est inférieure à la durée du procédé de l'invention, une proportion significative des lamelles de martensite n'a pas le temps de se transformer en nano-grains d'austénite. Et si la durée du traitement thermique est supérieure à la durée du procédé de l'invention, la matière recuit, les lamelles de martensite se retransforment en gros grains d'austénite.

La figure 8 présente des résultats d'essais réalisés sur différents échantillons avec le procédé de fabrication selon l'invention et sans le procédé de fabrication selon l'invention. L'axe des abscisses représente le nombre de cycles à rupture (N). L'axe des ordonnées représente l'élongation cyclique. Dans ce cas de figure, l'élongation cyclique (Ec) est de 0,55 mm. Ce facteur est identique pour tous les tests présentés ci-dessous. Un échantillon est une portion de tôle corruguée laminée à froid et déformée selon l'étape 110, comprenant un noeud complet. Chaque échantillon a été soumis à l'élongation cyclique, et le nombre de cycles jusqu'à rupture de l'échantillon a été observé. La rupture peut par exemple se traduire par des fissurations au niveau de la zone cible.

Deux échantillons de tôle d'acier inoxydable laminée à froid puis déformée (c'est-à-dire ayant subi l'étape 110 de déformation), tels qu'illustrés à la figure 4, ont été testés avec une étape de traitement thermique et une étape de refroidissement :
- 304L de composition (en pourcentage massique) suivante : 0.0159% C, 0.57% Si, 1.135% Mn, 0.0243% P, 0.0027% S, 18.272% Cr, 9.310% Ni, 0.116% Cu, 0.039% Mo et 0.0175% N.
- 301LN de composition (en pourcentage massique) suivante : 0.025% C, 0.52% Si, 1.70% Mn, 0.033% P, 0.003% S, 17.32% Cr, 6.63% Ni, 0.25% Cu et 0.108% N

Ces échantillons ont subi différents traitements thermiques sous environnement protecteur. Il en ressort les durées de vie moyenne à iso-sollicitation (en nombre de cycles) :
- 304L sans aucun traitement thermique (« Brut 304L ») : 155 147 cycles ;
- 304L avec un traitement thermique de 800°C pendant 6 minutes (selon le procédé de l'invention) : 470 467 cycles ;
- 304L avec un traitement thermique de 800°C pendant 10 minutes (au-delà de la plage) : 134 400 cycles ;
- 301LN sans traitement thermique (« Brut 301LN ») : 1 896 400 cycles ;
- 301LN avec un traitement thermique de 800°C pendant 5 minutes (dans la plage) : 2 000 000 cycles sans rupture observée (arrêt des essais à 2 000 000 de cycles).

On peut noter que les nombres de cycles indiqués sont des moyennes obtenues à partir de plusieurs essais réalisés pour une condition donnée.

L'échantillon 304L brut constitue un échantillon de référence, comprenant les zones cibles 14. Sa durée de vie est de 155147 cycles.

Un échantillon identique a été soumis au procédé de l'invention, avec une étape de traitement thermique de 800°C pendant 6 minutes (échantillon 304L 800°C/6mins). Sa durée de vie passe à 470467 cycles (soit 3 fois plus importante que celle de l'échantillon de référence).

Un échantillon identique a été soumis à un traitement thermique ne correspondant pas au procédé de l'invention, avec une étape de traitement thermique de 800°C pendant 10 minutes (échantillon 304L 800°C/10mins). Sa durée de vie passe à 134400 cycles. Autrement dit, sa durée de vie diminue par rapport à l'échantillon de référence. Non seulement un traitement thermique trop long ne permet pas d'améliorer la limite élastique de l'échantillon, mais en plus, il peut avoir un effet négatif sur la durée de vie de l'échantillon.

L'échantillon 301LN brut constitue un autre échantillon de référence, comprenant les zones cibles 14. Sa durée de vie est de 1 896 400 cycles.

Un échantillon identique a été soumis au procédé de l'invention, avec une étape de traitement thermique de 800°C pendant 5 minutes (301LN 800°C/5mins). Sa durée de vie est de 2000000 cycles sans détection de fissure (soit minimum 1,05 fois plus importante que celle de l'échantillon de référence).

Un autre essai a été réalisé sur un niveau de chargement plus important (« niveau de charge haut » avec une élongation cyclique (Ec) de 0,7 mm) avec un essai par condition. Il en ressort une durée de vie moyenne à iso-sollicitation (en nombre de cycles) comme suit :
- 301LN sans traitement thermique (« Brut 301LN ») : 367 200 cycles ;
- 301LN avec un traitement thermique de 750°C pendant 10 minutes (dans la plage de durée correspondant au procédé de l'invention) : 2 000 000 cycles sans rupture observée (arrêt des essais à 2 000 000 de cycles).

L'échantillon 301LN brut constitue un autre échantillon de référence, comprenant les zones cibles 14. Sa durée de vie au niveau de charge haut est de 367 200 cycles.

Un échantillon identique a été soumis au procédé de l'invention, avec une étape de traitement thermique de 750°C pendant 10 minutes (301LN 750°C/10mins). Sa durée de vie au niveau de charge haut est de 2000000 cycles sans détection de fissure (soit minimum 5,44 fois plus importante que celle de l'échantillon de référence). Les essais réalisés sur différents échantillons avec et sans le procédé de fabrication selon l'invention montrent clairement l'amélioration de la résistance à la fatigue des échantillons testés grâce au procédé de l'invention. Les observations microscopiques mettent en évidence les effets du traitement thermique sur la formation des microstructures, et donc sur les performances de limite élastique qui en résultent.

L'invention concerne aussi une tôle corruguée en acier inoxydable laminée à froid ayant une composition comprenant, les teneurs étant exprimées en masse :
0,005 % ≤ C ≤ 0,05 %, et préférentiellement C ≤ 0,03% ;
0,1 % ≤ Si ≤1 % ;
0,5% ≤ Mn ≤ 2 % ;
4 % ≤ Ni ≤ 10,5 % ;
16 % ≤ Cr ≤ 20 % ;
0 % < N ≤ 0,2 % ;
0 % < P ≤ 0,045 % ;
0 % < S ≤ 0,015 % ;
ladite tôle corruguée comprenant des corrugations définissant au moins une zone cible 14 présentant un taux de déformation géométrique compris entre 15% et 45%, préférentiellement inférieur à 35%, ou un taux de réduction de section dans les zones cibles inférieur à 25%, et dans laquelle la au moins une zone cible est recristallisée.

Avantageusement, la tôle corruguée présente une première corrugation 15 selon une première direction et une deuxième corrugation 16 selon une deuxième direction, sensiblement perpendiculaire à la première direction 15, à l'intersection de laquelle se trouve un noeud 13 comprenant la au moins une zone cible 14.

L'invention concerne aussi une cuve étanche et thermiquement isolante comprenant au moins une telle tôle corruguée.

Il apparaîtra plus généralement à l'Homme du métier que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'Homme du métier se basant sur ses connaissances générales.

## Revendications

1. Procédé de fabrication d'une tôle corruguée en acier inoxydable laminée à froid, comprenant les étapes suivantes :
- Fourniture (100) d'une tôle en acier inoxydable laminée à froid ayant une composition comprenant, les teneurs étant exprimées en masse :
0,005 % ≤ C ≤ 0,05 %, et préférentiellement C ≤ 0,03% ;
0,1 % ≤ Si ≤1 % ;
0,5% ≤ Mn ≤ 2 % ;
4 % ≤ Ni ≤ 10,5 % ;
16 % ≤ Cr ≤ 20 % ;
0 % < N ≤ 0,2 % ;
0 % < P ≤ 0,045 % ;
0% < S ≤ 0,015 % ;
le reste étant du fer et des éléments résiduels résultant de l'élaboration;
- Déformation (110) de la tôle en acier inoxydable, pour obtenir une tôle corruguée comprenant des zones cibles présentant un taux de déformation géométrique compris entre 15% et 45%, préférentiellement inférieur à 35%, ou un taux de réduction de section dans les zones cibles inférieur à 25% ;
- Traitement thermique (120) des zones cibles de la tôle corruguée à une température et une durée de traitement thermique définies selon la composition de l'acier inoxydable, pour obtenir une tôle corruguée à zones cibles recristallisées ;
- Refroidissement (130) de la tôle corruguée à zones cibles recristallisées,
le procédé de fabrication étant **caractérisé en ce que**, pour une teneur de l'acier inoxydable, exprimée en masse, en nickel et en azote telle que :
- 4% ≤ Ni ≤ 8%
- 0,05% < N ≤ 0,2%
la durée du traitement thermique (120) est définie selon la température du traitement thermique :
| température | durée |
|---|---|
| 700°C | 15 à 40 minutes |
| 750°C | 5 à 20 minutes |
| 800°C | 3 à 8 minutes |
| 850°C | 30 secondes à 3 minutes |
et, pour une teneur de l'acier inoxydable, exprimée en masse, en nickel et en azote telle que :
- 8% < Ni ≤ 10,5%
- 0 < N ≤ 1 %
la durée du traitement thermique (120) est définie selon la température du traitement thermique :
| température | durée |
|---|---|
| 750°C | 4 à 15 minutes |
| 800°C | 2 à 8 minutes |
| 850°C | 20 secondes à 2 minutes |
| 900°C | 5 à 15 secondes |

2. Procédé de fabrication selon la revendication 1, dans lequel le refroidissement (130) de la tôle corruguée à zones cibles recristallisées est réalisé à une vitesse supérieure ou égale à 50 °C/s.

3. Procédé de fabrication selon l'une quelconque des revendications 1 ou 2, dans lequel le traitement thermique (120) est réalisé dans un four à passage.

4. Procédé de fabrication selon l'une quelconque des revendications 1 à 3, dans lequel le traitement thermique (120) et/ou le refroidissement (130) est réalisé dans un environnement inerte ou réducteur.

5. Procédé de fabrication selon l'une quelconque des revendications 1 ou 2, dans lequel le traitement thermique (120) est réalisé dans un four sous vide.

6. Procédé de fabrication selon l'une quelconque des revendications 1 ou 2, dans lequel le traitement thermique (120) est réalisé par application de cloches chauffantes sur les zones cibles.

7. Procédé de fabrication selon l'une quelconque des revendications 1 à 6, dans lequel le refroidissement (130) de la tôle corruguée à zones cibles recristallisées est réalisé par trempe dans un fluide de trempe.

8. Procédé de fabrication selon l'une quelconque des revendications 1 à 6, dans lequel le refroidissement (130) de la tôle corruguée à zones cibles recristallisées est réalisé par injection sous pression d'un fluide de trempe, préférentiellement à température ambiante.

9. Procédé de fabrication selon l'une quelconque des revendications 1 à 8, comprenant en outre, préalablement au traitement thermique (120), une étape (115) de nettoyage de la tôle corruguée.

10. Tôle corruguée en acier inoxydable laminée à froid ayant une composition comprenant, les teneurs étant exprimées en masse :
0,005 % ≤ C ≤ 0,05 %, et préférentiellement C ≤ 0,03% ;
0,1 % ≤ Si ≤1 % ;
0,5% ≤ Mn ≤ 2 % ;
4 % ≤ Ni ≤ 10,5 % ;
16 % ≤ Cr ≤ 20 % ;
0 % < N ≤ 0,2 % ;
0 % < P ≤ 0,045 % ;
0% < S ≤ 0,015 % ;
le reste étant du fer et des éléments résiduels résultant de l'élaboration;
ladite tôle corruguée comprenant des corrugations définissant au moins une zone cible (14) présentant un taux de déformation géométrique compris entre 15% et 45%, préférentiellement inférieur à 35%, ou un taux de réduction de section dans les zones cibles inférieur à 25%, et dans laquelle la au moins une zone cible est recristallisée.

11. Tôle corruguée selon la revendication 10, dans laquelle la tôle corruguée présente une première corrugation (15) selon une première direction et une deuxième corrugation (16) selon une deuxième direction, sensiblement perpendiculaire à la première direction (15), à l'intersection de laquelle se trouve un noeud (13) comprenant la au moins une zone cible (14).

12. Cuve étanche et thermiquement isolante comprenant au moins une tôle corruguée selon l'une quelconque des revendications 10 ou 11.
